# EUROPEAN PATENT APPLICATION

(11) **EP 3 200 144 A1**
(43) Date of publication of application: **02.08.2017**
(21) Application number: 17151303.9
(22) Date of filing: 13.01.2017
(51) Int. Cl.: G06Q 30/06, G06Q 30/02

(54) **SELF-REGISTRATION SYSTEM FOR PRODUCTS**

(30) Priority: 15.01.2016 JP 2016006625
(71) Applicant: Toshiba TEC Kabushiki Kaisha, Tokyo 141-0032 (JP)
(72) Inventor: TAKAHATA, Masami, Shinagawa-ku, Tokyo 141-8562 (JP); AOYAMA, Ryuichi, Shinagawa-ku, Tokyo 141-8562 (JP); WATANABE, Naoki, Shinagawa-ku, Tokyo 141-8562 (JP); IKUMI, Tomonori, Shinagawa-ku, Tokyo 141-8562 (JP); OOKUMA, Yumiko, Shinagawa-ku, Tokyo 141-8562 (JP)
(74) Representative: Takeuchi, Maya

(57) **Abstract**

A non-transitory computer readable medium includes a program that is executable in a product registration server to cause the product registration server to perform a method of carrying out product registration. The method includes the steps of generating a product registration file associated with a customer ID, comparing non-acceptable ingredient IDs included in a customer record with ingredient IDs included in an ingredient record associated with a product ID, and responsive to a command to complete the product registration, transmitting data in a registered product list, and not data in a registration pending list, to a point-of-sale (POS) terminal. The registered product list includes product IDs of products having no ingredients identified by any of the non-acceptable ingredient IDs, and the registration pending list includes product IDs of products having at least one ingredient identified by one or more of the non-acceptable ingredient IDs.

## Description

### FIELD

The present invention relates to a self-registration technology in general and, in particular, to a method for carrying out product registration based on ingredients included therein, a non-transitory computer readable medium comprising a program that is executable in a product registration server to cause the product registration server, a computer program product storing executable code for the method, and a self-registration system.

### BACKGROUND

According to a self-registration system of one type, a customer goes around a sales floor together with a mobile computing device having a wireless communication function and electronically collects identification data of merchandise to be purchased using the mobile computing device. The identification data are wirelessly transmitted from the mobile computing device to a server, and the server processes product registration based on the transmitted data.

In general, the adoption of self-registration systems has not been rapid. Further advancements in user interface technology employed in self-registration systems could increase their adoption rate just as user interface technology employed in smart phones has contributed to the rapid growth of smart phones.

To this end, there is provided a method of carrying out product registration, the method comprising:
responsive to a first command to start product registration, which is wirelessly transmitted from a user computing device along with a customer ID, generating a product registration file associated with the customer ID in a local data storage of the product registration server, and retrieving a customer record associated with the customer ID from a first data storage region, the customer record including one or more non-acceptable ingredient IDs in the customer record;
responsive to a second command including a product ID, which is wirelessly transmitted from the user computing device along with the customer ID after the first command, retrieving an ingredient record associated with the product ID from a second data storage region, the ingredient record including one or more ingredient IDs in the ingredient record;
when each ingredient ID included in the ingredient record matches none of non-acceptable ingredient IDs included in the customer record, registering the product ID in a registered product list of a product registration file, and transmitting, to the user computing device, product registration screen data for generating a first product registration screen that does not include a selectable object for confirming registration of the product ID;
when an ingredient ID included in the ingredient record matches a non-acceptable ingredient ID included in the customer record, registering the product ID in a registration pending of the product registration file, and transmitting, to the user computing device, product registration screen data for generating a second product registration screen that includes the selectable object for confirming registration of the product ID; and
responsive to a third command to complete the product registration, which is wirelessly transmitted from the user computing device along with a point-of-sale (POS) terminal ID, transmitting data in the registered product list, and not data in the registration pending list, to a POS terminal identified by the POS terminal ID.

Preferably, the method further comprises:
responsive to a fourth command, which is wirelessly transmitted from the user computing device when the selectable object is selected on the second product registration screen, adding the product ID to the registered product list and deleting the product ID from the registration pending list.

Preferably still, the second product registration screen also includes a second selectable object for requesting a substitute product, and the method further comprises:
responsive to a fifth command, which is wirelessly transmitted from the user computing device when the second selectable object is selected on the second product registration screen, retrieving a product record associated with the product ID from a third data storage region and including a substitute product ID therein, and retrieving an ingredient record associated with the substitute product ID from the second data storage region, the ingredient record associated with the substitute product ID including one or more ingredient IDs therein.

Preferably yet, the method further comprises:
when none of the ingredient IDs included in the ingredient record associated with the substitute product ID match any of the non-acceptable ingredient IDs included in the customer record, registering the substitute product ID in a substitute list of the product registration file, and transmitting, to the user computing device, substitute product screen data for generating a substitute product screen including information of a substitute product identified by the substitute product ID; and
when an ingredient ID included in the ingredient record associated with the substitute product ID matches a non-acceptable ingredient ID included in the customer record, transmitting a notification of no substitute product to the user computing device, without registering the substitute product ID in the substitute list.

Suitably, the substitute product screen includes a third selectable object for confirming registration of the substitute product, and the method further comprises:
responsive to a fifth command, which is wirelessly transmitted from the user computing device when the third selectable object is selected on the substitute product screen, adding the substitute product ID to the registered product list and deleting the substitute product ID form the substitute list.

Suitably still, the first product registration screen also includes a fourth selectable object for requesting a recipe, and the method further comprises:
responsive to a sixth command, which is generated by the user computing device when the fourth selectable object is selected on the first product registration screen, retrieving a recipe record associated with the product ID from a fourth data storage region, the recipe record including one or more ingredient IDs therein.

Suitably yet, when none of the ingredient IDs included in the recipe record matches any of the non-acceptable ingredient IDs included in the customer record, registering the recipe record in a recipe list of the product registration file, and transmitting data of the recipe record to the user computing device; and
when an ingredient ID included in the recipe record matches a non-acceptable ingredient IDs included in the customer record, transmitting a notification of no recipe to the user computing device, without registering the recipe record in the recipe list.

Preferably further, the first product registration screen also includes a fifth selectable object for requesting a coupon, and the method further comprises:
responsive to a seventh command, which is generated by the user computing device when the fifth selectable object is selected on the first product registration screen, retrieving a coupon record associated with the product ID from a fifth data storage region, the coupon record including one or more ingredient IDs therein.

Typically, when none of the ingredient IDs included in the coupon record matches any of the non-acceptable ingredient IDs included in the customer record, registering the coupon record in a coupon list of the product registration file, and transmitting data of the coupon record to the user computing device; and
when an ingredient ID included in the coupon record matches a non-acceptable ingredient IDs included in the customer record, transmitting a notification of no coupon to the user computing device, without registering the coupon record in the coupon list.

The invention also relates to a non-transitory computer readable medium comprising a program that is executable in a product registration server to cause the product registration server to perform the method of carrying out product registration as defined above.

The invention further relates to a computer program product storing executable code for the method as defined above.

The invention further concerns a self-registration system comprising:
a product registration server;
a user computing device in communication with the product registration server; and
a plurality of point-of-sale terminals in communication with the product registration server, wherein
the product registration server is configured to carry out product registration by performing the steps of the method as defined above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram of a shopping support system and a user's terminal according to an embodiment.
FIG. 2 is a flowchart illustrating a procedure of main information processing performed by a processor of the user's terminal.
FIG. 3 is a flowchart illustrating another procedure of main information processing performed by the processor of the user's terminal.
FIG. 4 is a flowchart illustrating a specific procedure of approval processing in FIG. 3.
FIG. 5 is a flowchart illustrating a procedure of main information processing performed by a processor of a support server included in the shopping support system.
FIG. 6 is a flowchart illustrating another procedure of main information processing performed by the processor of the support server.
FIG. 7 is a flowchart illustrating a specific procedure of approval reception processing in FIG. 6.
FIG. 8 is a flowchart illustrating a specific procedure of response processing in FIG. 6.

### DETAILED DESCRIPTION

An embodiment provides a shopping support device which enables a customer who does not or cannot intake a certain ingredient, to do shopping without worries and receive a recipe, a coupon, or the like related to purchased products.

In an exemplary embodiment, a non-transitory computer readable medium comprising a program that is executable in a product registration server to cause the product registration server to perform a method of carrying out product registration. The method includes the steps of: responsive to a first command to start product registration, which is wirelessly transmitted from a user computing device along with a customer ID, generating a product registration file associated with the customer ID in a local data storage of the product registration server, and retrieving a customer record associated with the customer ID from a first data storage region, the customer record including one or more non-acceptable ingredient IDs in the customer record; responsive to a second command including a product ID, which is wirelessly transmitted from the user computing device along with the customer ID after the first command, retrieving an ingredient record associated with the product ID from a second data storage region, the ingredient record including one or more ingredient IDs in the ingredient record; when each ingredient ID included in the ingredient record matches none of non-acceptable ingredient IDs included in the customer record, registering the product ID in a registered product list of a product registration file, and transmitting, to the user computing device, product registration screen data for generating a first product registration screen that does not include a selectable object for confirming registration of the product ID; when an ingredient ID included in the ingredient record matches a non-acceptable ingredient ID included in the customer record, registering the product ID in a registration pending of the product registration file, and transmitting, to the user computing device, product registration screen data for generating a second product registration screen that includes the selectable object for confirming registration of the product ID; and responsive to a third command to complete the product registration, which is wirelessly transmitted from the user computing device along with a point-of-sale (POS) terminal ID, transmitting data in the registered product list, and not data in the registration pending list, to a POS identified by the POS ID.

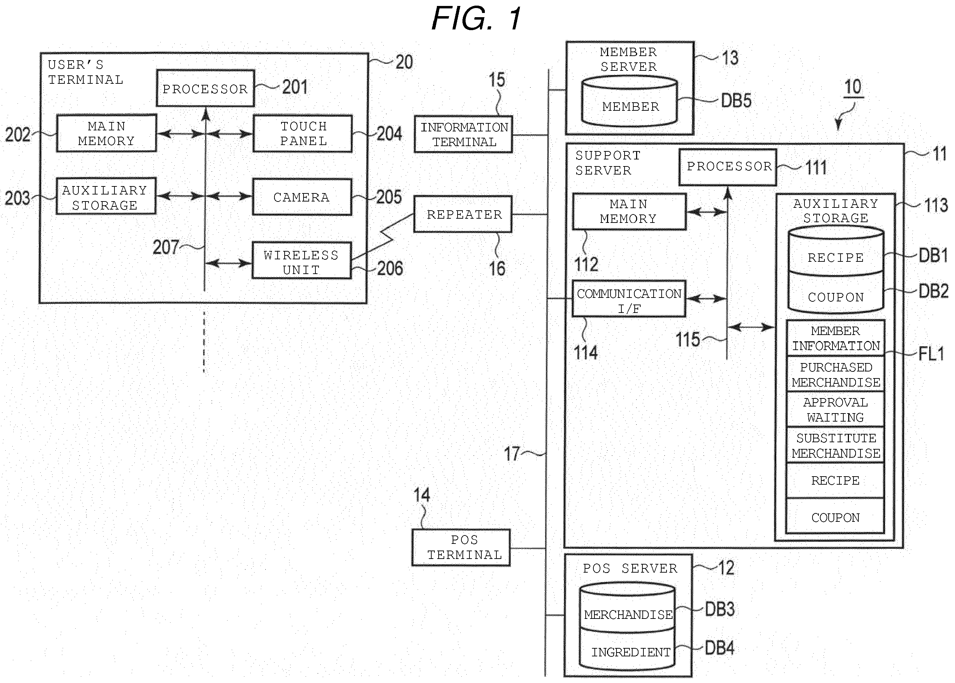

FIG. 1 is block diagram of devices according to an embodiment, such as a shopping support system 10 set in a store and a user's terminal 20 possessed by a customer who does a shopping in the store.

The shopping support system 10 includes a shopping support server (in the following, referred to as a support server) 11, a point of sales (POS) server 12, a member server 13, a POS terminal 14, an information terminal 15, and a repeater 16. The shopping support system 10 includes a network 17 such as a wired LAN or a wireless LAN and the support server 11, the POS server 12, the member server 13, the POS terminal 14, the information terminal 15, and the repeater 16 are connected to the network 17.

The servers 11, 12, and 13 are located in, for example, an office of the store. The location of the respective servers 11, 12, and 13 is not particularly limited as long as the servers 11, 12, and 13 are capable of performing data communication with the POS terminal 14, the information terminal 15, and the repeater 16. The servers 11, 12, and 13 may be located in an arbitrary site other than the store. For example, the servers 11, 12, and 13 may be implemented by cloud computing on the Internet. The servers 11, 12, and 13 may be implemented by different computers, respectively and functions as respective servers may also be implemented by a single computer.

The POS terminal 14 is located in, for example, a checkout space (register) of the store. The POS terminal 14 performs registration processing for registering sales data of merchandise to be purchased by a customer (purchased merchandise) in a memory. The payment amount of the purchased merchandise is calculated through the registration processing, and thus the POS terminal 14 performs settlement processing regarding the payment. The settlement processing includes settlement processing by a cash payment, settlement processing by a credit payment, and the like. The registration processing and the settlement processing are well-known processing in the field of the POS terminal 14, and thus detailed description thereof will be omitted.

The POS terminal 14 stores a POS ID. The POS ID is information unique to the POS terminal 14. When the shopping support system 10 includes a plurality of POS terminals 14, any of the POS IDs of the POS terminals 14 are not identical. The servers 11, 12, and 13 identify the POS terminal 14 using the POS ID. In the POS terminal 14, a bar code representing a POS ID of its own POS terminal is presented. For example, in a case of a face-to-face-type or a semi-self-type POS terminal 14, the bar code is presented in a side opposite to a side of the terminal 14 that a cashier operates, that is, a shopper's side. In a case of a self-type POS terminal, the bar code is presented in a front side of the terminal 14 faces a shopper. The position of the bar code described above is just an example. The position of the bar code is not particularly limited as long as the shopper is able to read using a camera unit 205 of the user's terminal 20. A two-dimensional data code may also be used instead of the bar code.

The information terminal 15 is located in, for example, a sales space or a vicinity of an entrance of the store. The information terminal 15 includes a touch panel display as a user interface. The information terminal 15 includes a scanner for reading a bar code or a printer for printing various pieces of information. The information terminal 15 may be electrically connected to an external device, which has a print function, for example, a multifunction peripheral. The customer can acquire various pieces of service information such as a recipe or a coupon through the information terminal 15.

The repeater 16 is located in, for example, a ceiling part of the sales space in order to perform wireless communication with the user's terminal 20 possessed by the customer who is doing shopping in the sales space of the store. When a wireless data signal transmitted from the user's terminal 20 is received, the repeater 16 transmits the data signal to any of the servers 11, 12, and 13 through the network 17. The repeater 16 converts data signal addressed to the user's terminal 20 received from any of the servers 11, 12, and 13 into a wireless data signal and transmits the data signal to the user's terminal 20 as a destination.

In FIG. 1, one POS terminal 14, one information terminal 15, and one repeater 16 are set but are not limited to one POS terminal 14, one information terminal 15, and one repeater 16. Two or more POS terminals 14, two or more information terminals 15, and two or more repeaters 16 may also be connected to the network 17 to serve as the shopping support system 10.

The support server 11 includes a processor 111, a main memory 112, an auxiliary storage device 113, a communication interface 114 and the like and may connect these components through a system transmission path 115 including an address bus, a data bus, or the like. The support server 11 serve as a computer together with the processor 111, the main memory 112, and the auxiliary storage device 113, and the system transmission path 115 connecting these components.

The processor 111 corresponds to a central portion of the computer described above. The processor 111 controls respective units for performing various functions as the support server 11 according to an operating system or an application program.

The main memory 112 corresponds to a main storage of the computer described above. The main memory 112 includes a nonvolatile memory region and a volatile memory region. The main memory 112 stores the operating system or the application program in the nonvolatile memory region. The main memory 112 stores data necessary for controlling each unit by the processor 111 in a nonvolatile memory region or a volatile memory region. The main memory 112 uses the volatile memory region as a work area in which data can be suitably rewritten by the processor 111.

The auxiliary storage device 113 corresponds to an auxiliary storage of the computer. The auxiliary storage device 113 is, for example, an EEPROM. The HDD, SSD, and the like may also be used as the auxiliary storage device. The auxiliary storage device 113 stores data used for various kinds of processing performed by the processor 111, data generated from processing by the processor 111, or the like. The auxiliary storage device 113 may store the application program described above.

The communication interface 114 is an interface for data communication performed either between the support server 11 and another server 12 or 13 that are connected with the support server 11 through the LAN 17 or between the POS terminal 14 and the information terminal 15 or repeater 16.

The support server 11 stores a recipe information database DB1 and a coupon information database DB2 in the auxiliary storage device 113. The recipe information database DB1 stores a recipe information record prepared for each cooking item. The processor 111 of the support server 11 accesses the recipe information database DB1 to perform read and write operations for the recipe information record.

The recipe information record includes a recipe ID, a recipe name and image data, cooking procedure information, and a plurality of ingredient IDs with quantity thereof and the like. The recipe ID is a unique code allocated to each cooking item in order to identify various cooking items. The recipe name and image data are a name and an image of the cooking item identified by a corresponding recipe ID. The cooking procedure information is text data indicating a cooking procedure of the same cooking item. The pairs of data of the quantity and an ingredient ID indicate an ID of the ingredient used in the same cooking item and quantity of the ingredient.

The coupon information database DB2 stores a coupon information record representing contents of a coupon issued from a store or the like with respect to a customer. The support server 11 accesses the coupon information database DB2 to perform read and write operations for the coupon information record.

The coupon information record includes an issue ID, a target ID, classification, a value, an image, and the like. The issue ID is a merchandise ID of merchandise for which a coupon is to be issued. The target ID is a merchandise ID of other merchandise of which prices are discounted through a coupon issued in response to purchase of the merchandise specified by the issue ID. The classification is used to classify types of coupons (reduction in price by a fixed amount, reduction in price by rate, or the like). In the present embodiment, classification for the price reduction coupon is set as "1", classification for the discount coupon is set as "2", and classification for the price change coupon is set as "3". The value is a reduced amount in a case of the price reduction coupon, a discount rate in a case of the discount coupon, and a price after the price change in a case of the price change coupon. The image represents an image of a coupon.

The shopping support system 10 implements a service of introducing a recipe that uses the merchandise which the customer is to purchase as an ingredient. The shopping support system 10 implements a service of issuing coupons of other merchandise according to the merchandise which the customer is to purchase. That is, the recipe information and the coupon information are service information associated with a food product related to the merchandise specified by the merchandise ID. The service information associated with a food product is not limited to the recipe information or the coupon information.

The support server 11 prepares a storage area for a transaction file FL1 in the auxiliary storage device 113. The transaction file FL1 is generated for each customer. The support server 11 can simultaneously store a plurality of transaction files FL1 in the storage area. Data of the transaction file FL1 includes member information, a purchased merchandise list (registered product list), an approval waiting list (registration pending list), a substitute merchandise list (substitute list), a recipe list, and a coupon list. Details of these kinds of data will be described in conjunction with operations of the shopping support system 10 below. The recipe information database DB1 and the coupon information database DB2 may not necessarily include the support server 11. Another server which is accessible by the support server 11 may store the recipe information database DB1 and the coupon information database DB2.

The POS server 12 and the member server 13 include a processor, a main memory, an auxiliary storage device, and a communication interface similar to the support server 11. The POS server 12 and the member server 13 respectively serves as a computer having the processor, the main memory, the auxiliary storage device, and a system transmission path which connects these components.

The POS server 12 stores merchandise information database DB3 and an ingredient information database DB4 in the auxiliary storage device. The member server 13 stores a member database DB5 in the auxiliary storage device.

The merchandise information database DB3 stores a merchandise information record prepared for each merchandise. The merchandise is not limited to a food product. Merchandise information record of merchandise other than a food product may be stored in the merchandise information database DB3. The processor 111 of the POS server 12 accesses the merchandise information database DB3 to perform read and write operations of the merchandise information record.

The merchandise information record includes data such as merchandise ID, a classification ID, merchandise name, a unit price, a weight, and a substitute merchandise ID. The merchandise ID is a unique code allocated to each merchandise for identification of respective merchandise. Accordingly, the merchandise ID functions as merchandise identification information. The classification ID is a unique code allocated to each classification for identification of classification to which the merchandise belongs. In a case of a food product, the classifications include "grains", "beans", "meats", "fish and shellfishes", "seaweeds", "vegetables", "fruits", "mushrooms", "dairy products", and the like. The merchandise name is a name of merchandise identified by the corresponding merchandise ID. The unit price is a price per a single piece of the same merchandise and the weight is an average weight per a single piece. The substitute merchandise ID is a merchandise ID of another merchandise which can be substituted for the merchandise identified by the corresponding merchandise ID. The number of substitute merchandise IDs is not limited to one. Two or more substitute merchandise IDs may be included in the merchandise information record. On the other hand, when another merchandise which can be substituted does not exist, no substitute merchandise ID is included in the merchandise information record.

The ingredient information database DB4 stores an ingredient information record prepared for each merchandise classified as a food product. The POS server 12 accesses the ingredient information database DB4 to perform read and write operations of the ingredient information record.

The ingredient information record includes data such as merchandise ID or an ingredient ID. The ingredient ID is a unique code allocated to each ingredient for identification of ingredients (raw material) contained in the food product identified by the merchandise ID. For example, in a case of a food product using eggs, sugar, and milk as raw material, the ingredient information record includes the merchandise ID of the food product and IDs of respective ingredients of eggs, sugar, and milk.

The member information database DB5 stores a member information record for each customer who has been registered as a member, that is, each member. The member server 13 accesses the member information database DB5 to perform read and write operations of the member information record.

The member information record includes a member ID, personal data, a non-acceptable ingredient ID, and the like. The member ID is a unique code allocated to each member for identification of respective members. Accordingly, the member ID functions as the customer identification information. The personal data include a member name, sex, age and the like of the member identified by the corresponding member ID. The non-acceptable ingredient ID is an ingredient ID of a non-acceptable ingredient set for the member. For example, when the member is a food product allergy patient who is reactive with a specific allergen, an ingredient ID of the ingredient causing an allergic reaction is set as a non-acceptable ingredient ID. For example, when the member cannot eat a specific ingredient for illness problem or religious reasons, an ingredient ID of the ingredient is set as a non-acceptable ingredient ID. For a member who is irrelevant to a non-acceptable ingredient, the non-acceptable ingredient ID is not set in the member information record.

The user's terminal 20 includes a processor 201, a main memory 202, an auxiliary storage device 203, a touch panel 204, a camera unit 205, a wireless unit 206, and the like, and connects these components to a system transmission path 207 including an address bus, a data bus, and the like. The user's terminal 20 serves as a computer with the processor 201, the main memory 202, the auxiliary storage device 203, and the system transmission path 207 connecting these components.

The processor 201 corresponds to a central functional element of the computer described above. The processor 201 controls each unit of the user's terminal 20 for performing various functions according to an operating system or an application program.

The main memory 202 corresponds to a main storage of the computer described above. The main memory 202 includes a nonvolatile memory region and a volatile memory region. The main memory 202 stores the operating system or the application program in the nonvolatile memory region. The main memory 202 stores data necessary for controlling of each unit by the processor 201 in a nonvolatile memory region or a volatile memory region. The main memory 202 uses the volatile memory region as a work area in which data can be suitably rewritten by the processor 201.

The auxiliary storage device 203 corresponds to an auxiliary storage of the computer. The auxiliary storage device 203 is, for example, an EEPROM. The HDD, SSD, or the like may also be used as the auxiliary storage device. The auxiliary storage device 203 stores data used for various kinds of processing carried out by the processor 201, data generated through processing by the processor 201, or the like. The auxiliary storage device 203 may store the application program described above.

The touch panel 204 functions as an input device and a displaying device of the user's terminal 20. An icon for causing the application program described above to start is displayed on the touch panel 204.

The camera unit 205 is able to capture an image of the bar code with a sufficient resolution.

The wireless unit 206 performs data transmission and reception with the repeater 16 and the wireless unit 206 using wireless communication. For example, an information processing device, in which the camera unit 205 and the wireless unit 206 are included, among portable information processing devices such as a smart phone, a mobile phone, and a tablet terminal is used as the user's terminal 20.

The shopping support terminal program is installed in the user's terminal 20 having such a configuration, and as a result the user's terminal 20 is able to be used in the shopping support system 10. The shopping support terminal program controls the processor 201 such that the user's terminal 20 is capable of being used in the shopping support system 10. The installed shopping support terminal program is stored in, for example, the auxiliary storage device 203.

On the other hand, the shopping support server program resides in the support server 11. The shopping support server program cooperates with a shopping support terminal program executed by the user's terminal 20 to support shopping of the customer who possesses the user's terminal 20. Specifically, the shopping support server program supports the customer's shopping such that the customer who has the non-acceptable ingredient can do shopping the food product without worries and receives a service of providing a recipe or a coupon without worries. Here, the support server 11 functions as a shopping support device.

In the following, operations of the shopping support system 10 will be described. First, a setting operation of the non-acceptable ingredient will be described. The customer (member) who has the non-acceptable ingredient can set information of the non-acceptable ingredient in the shopping support system 10 using the user's terminal 20.

First, the customer operates the touch panel 204 of the user's terminal 20 to start the shopping support terminal program. When the shopping support terminal program is started, a login screen is displayed on the touch panel 204 and the customer can input a member ID and perform login. The customer may input a password together with the member ID.

When the login is performed, the processor 201 controls the wireless unit 206 such that login information is transmitted to the support server 11 as a destination. With this control, login information is wirelessly transmitted from the wireless unit 206 to the support server 11. The login information includes the member ID. The login information is received by the repeater 16 and transmitted to the support server 11 through the LAN 17.

The processor 111 of the support server 11 cooperates with the member server 13 to perform login authentication. The processor 111 notifies an authentication result to the user's terminal 20 in a path which is a reverse route for login information.

When the login is approved, the processor 201 stores the member ID. The processor 201 displays a selection screen of a job menu on the touch panel 204. The job menu includes at least a setting menu of a non-acceptable ingredient and a shopping support menu.

The customer, in order to set the non-acceptable ingredient, operates the touch panel 204 to select the setting menu of the job menu. When the setting menu is selected, the processor 201 displays an ingredient selection screen on the touch panel 204. The ingredient selection screen is a screen through which a selective input regarding ingredients such as milk, eggs, fishes, shrimp, wheat, beef, pork, or the like can be made. The customer selects the non-acceptable ingredient by a touch operation. In this case, when there is a plurality of non-acceptable ingredients, the customer can simultaneously select the plurality of ingredients. When the selection of the non-acceptable ingredient is ended, the processor 201 controls the wireless unit 206 such that information of the non-acceptable ingredient is transmitted to the support server 11 as a destination. With this control, notification information of the non-acceptable ingredient is wirelessly transmitted from the wireless unit 206 to the support server 11. The notification information includes an ingredient ID of an ingredient selected from ingredient selection screen and the member ID used for the login. The notification information is received by the repeater 16 and transmitted to the support server 11 through the LAN 17.

The processor 111 of the support server 11 cooperates with the member server 13 to update a non-acceptable ingredient ID of the corresponding member information record. Specifically, the processor 111 instructs the member server 13 to set the ingredient ID included in the same notification information in the member information record, in which the member ID is set, included in notification information as the non-acceptable ingredient ID. A processor of the member server 13 receives the instruction to thereby retrieve the member information database DB5 and rewrite the non-acceptable ingredient ID of the member information record, in which the member ID is set, with the ingredient ID included in the notification information.

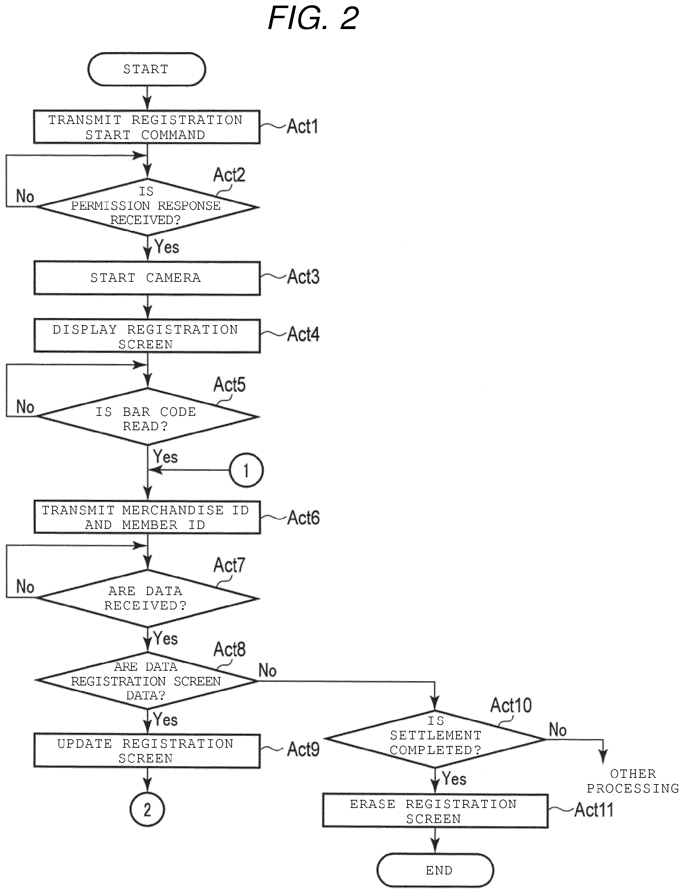

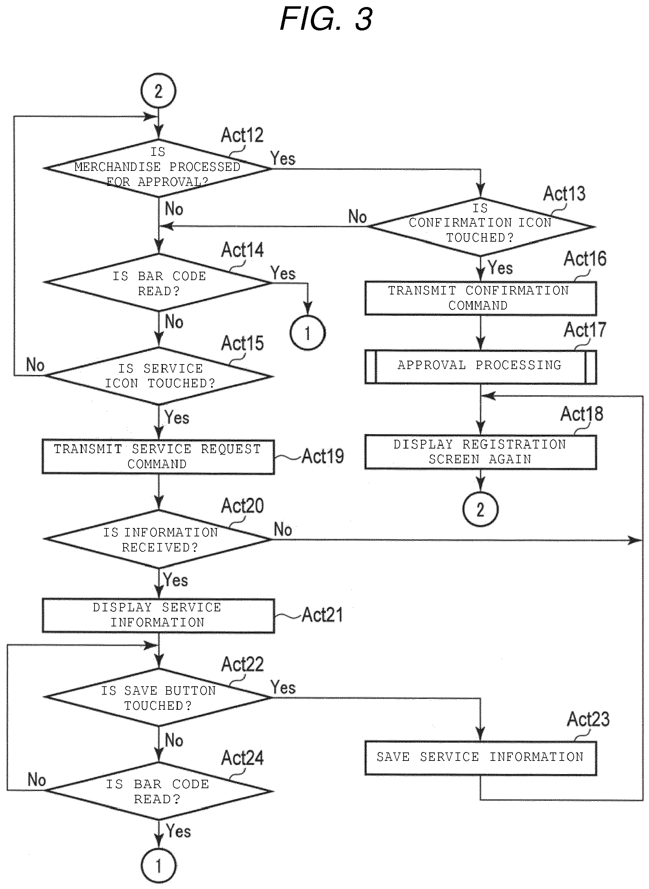

Next, operations on a case where the customer who sets the non-acceptable ingredient receives the shopping support will be described. The operations to be performed until the login is approved are those described as above. When the login is approved and the selection screen of the job menu is displayed on the touch panel 204, the customer operates the touch panel 204 and selects the shopping support menu. When the shopping support menu is selected, the processor 201 starts information processing of which the procedure is illustrated in flowcharts of FIG. 2 to FIG. 4.

First, the processor 201 transmits a registration start request command to the support server 11 as a destination (Act1). The registration start request command includes the member ID used for login. Here, the user's terminal 20 includes a first notifying unit that notifies customer identification information (member ID).

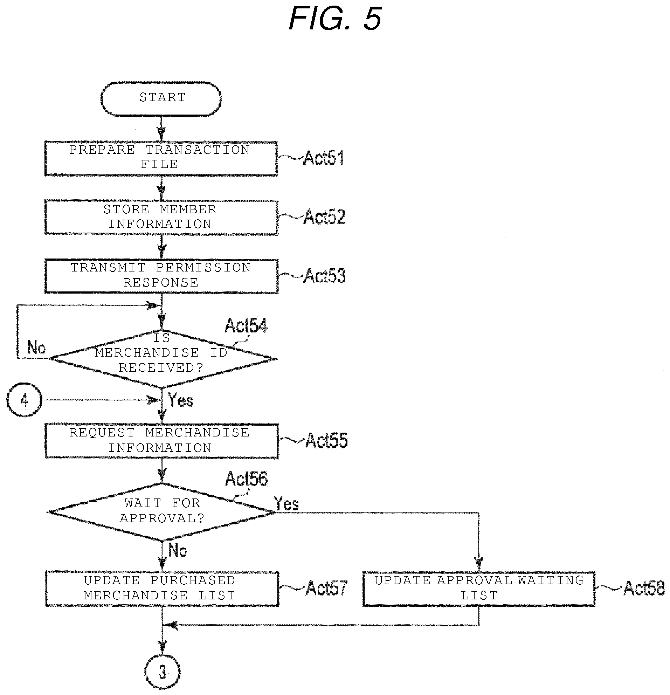

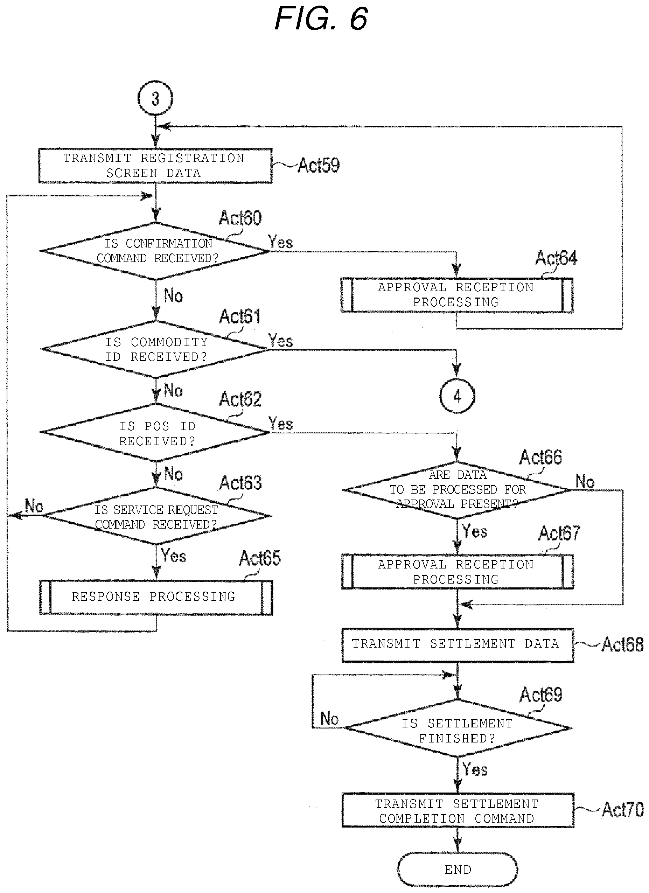

When the support server 11 receives the registration start request command through the communication interface 114 which is a communication unit, the processor 111 starts information processing of which the procedure is illustrated in flowcharts of FIG. 5 to FIG. 8. First, the processor 111 prepares a transaction file FL1 in a transaction file region of the auxiliary storage device 113 (Act51). The processor 111 stores member information of a customer (member) identified by the member ID included in the registration start request command in a transaction file region (Act52). That is, the processor 111 transmits the member information request command to the member server 13 as a destination. The member information request command includes the member ID detected from the registration start request command. The processor of the member server 13 reads the member information record, in which the member ID is set, included in the member information request command from the member information database DB5. The processor transmits the member information record to the support server 11 as a destination. When the member information record is received, the processor 111 of the support server 11 stores member information such as the member ID, the personal data, the non-acceptable ingredient ID, which are set in the member information record, in the transaction file FL1. Thereafter, the processor 111 of the support server 11 identifies the transaction file FL1 for each customer by the member ID within the member information. Here, the processor 111 and the transaction file FL1 serve as a storage unit.

The processor 111 transmits a permission response signal to the user's terminal 20 as a destination, which is a transmission source of the registration start request command (Act53). The processor 201 of the user's terminal 20 which transmits the registration start request command waits for a permission response signal (Act2). When the permission response signal is received through the wireless unit 206 (YES in Act2), the processor 201 starts the camera unit 205 (Act3). The processor 201 uses a screen of the touch panel 204 as a registration screen (Act4).

The customer who confirms the registration screen starts shopping. In this case, the customer captures an image of the bar code including merchandise ID of merchandise which the customer is to purchase, that is, merchandise which the customer plans to register using the camera unit 205.

The processor 201 waits until the bar code is read from the image captured by the camera unit 205 (Act5). When the bar code is read (YES in Act5), the processor 201 transmits the merchandise ID included in the bar code together with the member ID to the support server 11 as a destination (Act6). Here, the user's terminal 20 includes a second notifying unit that notifies merchandise identification information (merchandise ID).

The processor 111 of the support server 11 waits for the merchandise ID (Act54). When the merchandise ID is received through the communication interface 114 which is a communication unit, the processor 111 transmits merchandise information request command to the POS server 12 of a destination (Act55). The merchandise information request command includes the merchandise ID received from the user's terminal 20. The processor of the POS server 12 reads the merchandise information record, in which the merchandise ID is set, from the merchandise information database DB3. The processor retrieves the ingredient information database DB4 to determine the presence and absence of the ingredient information record in which the merchandise ID is set. When the ingredient information record is absent, the processor transmits only the merchandise information record to the support server 11 as a destination. When the ingredient information record is present, the processor reads the ingredient information record from the ingredient information database DB4. The processor transmits the merchandise information record and the ingredient information record to the support server 11 as a destination.

The processor 111 of the support server 11 determines whether or not the merchandise specified by the merchandise ID is being processed for approval (Act56). When only the merchandise information record is received from the POS server 12, the processor 111 determines that the merchandise is not to be processed for approval. When the merchandise information record and the ingredient information record are received from the POS server 12, the processor 111 determines whether an ingredient ID, which is coincident with the non-acceptable ingredient ID within the member information stored in the transaction file FL1, is included in the ingredient information record. Here, in the transaction file FL1, the member ID transmitted from the user's terminal 20 is included in the member information.

When an ingredient ID that matches a non-acceptable ingredient ID is not included, the processor 111 determines that the merchandise is not to be processed for approval. When an ingredient ID that matches a non-acceptable ingredient ID is included, the processor 111 determines that the merchandise is to be processed for approval. Here, the processor 111 functions as a specifying unit and a determining unit.

When it is determined that the merchandise is not to be processed for approval, the processor 111 updates a purchased merchandise list of the transaction file FL1 (Act57). Specifically, the processor 111 detects respective pieces of merchandise data of the merchandise ID, the classification ID, the merchandise name, the unit price, and the weight from the merchandise information record, and adds the detected merchandise data to the purchased merchandise list. When it is determined that the merchandise is to be processed for approval, the processor 111 updates the approval waiting list of the transaction file FL1 (Act58). Specifically, the processor 111 detects respective pieces of merchandise data of the merchandise ID, the classification ID, the merchandise name, the unit price, the weight, and the substitute merchandise ID from the merchandise information record, and adds the detected merchandise data to the approval waiting list.

The processor 111 transmits the registration screen data to the user's terminal 20 as a destination (Act59). The registration screen data include merchandise data registered in the purchased merchandise list and the total amount of money of the merchandise data. The registration screen data includes a service icon (recipe icon) which enables a recipe providing service and a service icon (coupon icon) which enables a coupon providing service. Furthermore, when the merchandise data are registered in the approval waiting list, a confirmation icon which informs that the non-acceptable ingredient is contained and thus confirmation is needed is included in the registration screen data. Here, the processor 111 functions as the first informing unit.

The processor 201 of the user's terminal 20 waits for reception of data (Act7). When data are received through the wireless unit 206 (YES in Act7), the processor 201 determines whether or not the received data are the registration screen data (Act8). When the received data are registration screen data (YES in Act8), the processor 201 updates the registration screen of the touch panel 204 (Act9). With this, the merchandise name, the unit price, the total amount of money, or the like of the merchandise registered in the purchased merchandise list and the service icons (recipe icon and coupon icon) are displayed on the registration screen. When data are registered in the approval waiting list, the confirmation icon is also displayed.

When the confirmation icon is displayed on the registration screen, the customer is able to know that merchandise containing the non-acceptable ingredient is included in the merchandise which he/she plans to purchase. When confirming which merchandise contains the non-acceptable ingredient, the customer touches the confirmation icon. When the customer postpones confirmation of the merchandise and continues shopping, the customer captures an image of the bar code including the merchandise ID of merchandise which the customer plans to purchase by the camera unit 205. When the recipe providing service or the coupon providing service is received, the customer touches the corresponding service icon, that is, the recipe icon or the coupon icon.

The processor 201 of the user's terminal 20 that updates the registration screen determines whether the merchandise containing the non-acceptable ingredient is to be processed for an approval (Act12). When the confirmation icon is included in the registration screen data, the processor 201 certifies that the merchandise is to be processed for the approval. When the merchandise is to be processed for the approval (YES in Act12), the processor 201 determines whether or not the confirmation icon is touched (Act13). When the confirmation icon is not touched (NO in Act13) or when the merchandise is not to be processed for the approval (NO in Act12), the processor 201 waits until the bar code is read or the service icon is touched (Act14, Act15). When the bar code is read from the image captured by the camera unit 205 (YES in Act14), the process proceeds to Act6 described above. The processor 111 repeats processing of Act6 and thereafter in a similar manner to the processes described above.

When the confirmation icon is touched (YES in Act12), the processor 201 transmits the confirmation command to the support server 11 as a destination (Act16). The confirmation command includes the member ID used for the login.

The processor 111 of the support server 11 that transmits the registration screen data determines whether or not the confirmation command is received (Act60). When the confirmation command is not received (NO in Act60), the processor 111 determines whether or not the merchandise ID is received (Act61). When the merchandise ID is not received (NO in Act61), the processor 111 determines whether or not a POS ID is received (Act62). When the POS ID is not received (NO in Act62), the processor 111 determines whether or not a service request command (described below) is received (Act63).

When the merchandise ID is received through the communication interface 114 (YES in Act61), the process proceeds to Act55 described above. The processor 111 repeats the processing of Act55 and thereafter in a similar manner to the processes described above.

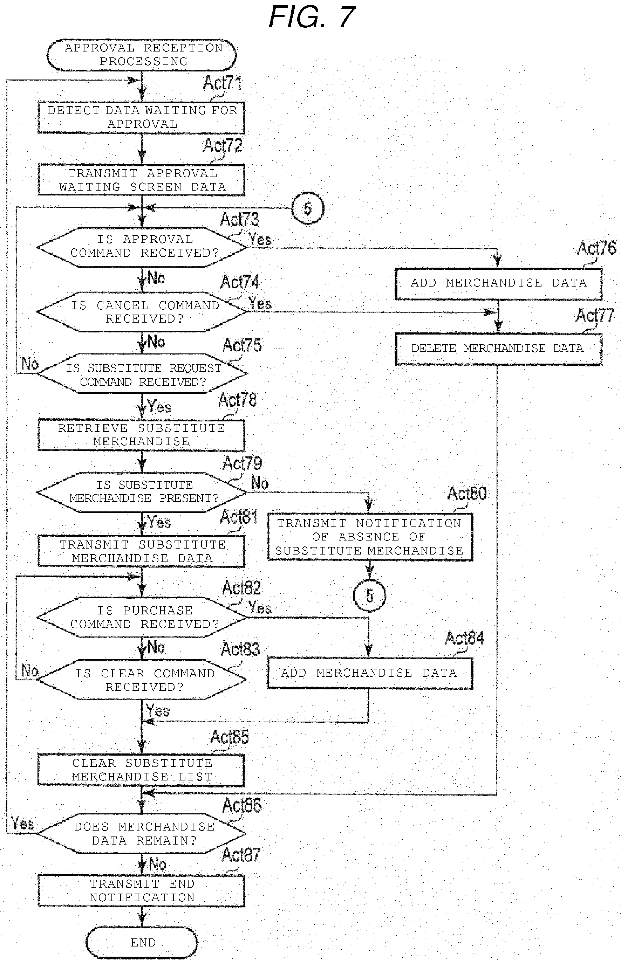

When the confirmation command is received through the communication interface 114 (YES in Act60), the processor 111 executes approval reception processing of a procedure which is specifically illustrated in FIG. 7 (Act64). That is, the processor 111 detects a single piece of merchandise data from the approval waiting list (Act71). The processor 111 transmits data of the approval waiting screen including at least the merchandise ID and the merchandise name of the merchandise data to the user's terminal 20 as a destination (Act72).

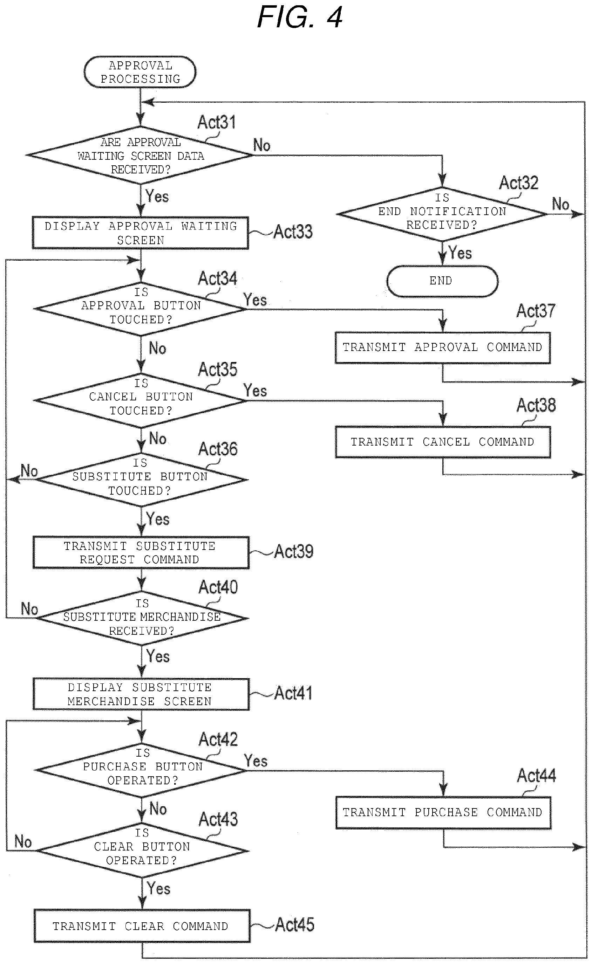

The processor 201 of the user's terminal 20 that transmits the confirmation command executes processing which is specifically illustrated in FIG. 4 on the merchandise. That is, the processor 201 waits for the approval waiting screen data (Act31). When the approval waiting screen data are received through the wireless unit 206, the processor 201 causes the touch panel 204 to display the approval waiting screen (Act33). In the approval waiting screen, the merchandise name included in the approval waiting screen data is displayed. The approval button, the cancel button, and the substitute button are also displayed on the approval waiting screen.

The customer who checks the approval waiting screen is able to know the merchandise containing the non-acceptable ingredient from merchandise name on the screen. The customer determines whether or not he/she purchases the merchandise containing the non-acceptable ingredient. In a case of purchasing the merchandise, the customer touches an approval button. In a case of not purchasing the merchandise, the customer touches a cancel button. When the customer wants to know a substitute merchandise which can be substituted for the merchandise containing the non-acceptable ingredient, the customer touches a substitute button.

The processor 201 waits until the approval button, the cancel button, or the substitute button is touched (Act34, Act35, or Act36). When the approval button is touched (YES in Act34), the processor 201 transmits the approval command to the support server 11 of a destination (Act37). When the cancel button is touched (YES in Act35), the processor 201 transmits the cancel command to the support server 11 of a destination (Act38). When the substitute button is touched (YES in Act36), the processor 201 transmits a substitute request command to the support server 11 (Act39). All of these approval command, cancel command, and substitute request command include the member ID and the merchandise ID of the selected merchandise.

The processor 111 of the support server 11 that transmitted the approval waiting screen data waits for a command to be sent from the user's terminal 20 (Act73, Act74, or Act75). When an approval command is received through the communication interface 114 (YES in Act73), the processor 111 moves the merchandise data, in which the merchandise ID included in the approval command is set, from the approval waiting list to the purchased merchandise list (Act76). The processor 111 deletes the merchandise data from the approval waiting list (Act77). When a cancel command is received through the communication interface 114 (YES in Act74), the processor 111 deletes the merchandise data, in which the merchandise ID included in the cancel command is set, from the approval waiting list (Act77). Here, the processor 111 functions as a first receiving unit.

When a substitute request command is received through the communication interface 114 (YES in Act75), the processor 111 retrieves a substitute merchandise for the merchandise specified by the merchandise ID included in the substitute request command (Act78). That is, the processor 111 detects a substitute merchandise ID from the merchandise data, in which the merchandise ID registered in the approval waiting list is set. The processor 111 transmits the substitute merchandise information request command to the POS server 12. The substitute merchandise information request command includes all substitute merchandise IDs detected from the merchandise data. The processor of the POS server 12 reads the merchandise information record in which the substitute merchandise ID included in the substitute merchandise information request command is set as the merchandise ID, from the merchandise information database DB3. The same processor reads the ingredient information record in which the substitute merchandise ID is set as the merchandise ID, from the ingredient information database DB4. The same processor transmits the merchandise information record and the ingredient information record to the support server 11. The processor 111 of the support server 11 determines whether or not an ingredient ID that matches the non-acceptable ingredient ID within the member information stored in the transaction file FL1 is included for each ingredient information record received from the POS server. When the ingredient ID that matches the non-acceptable ingredient ID is not included, the processor 111 determines that the merchandise specified by the merchandise ID of the ingredient information record is a substitute merchandise. The processor 111 detects respective pieces of merchandise data of the merchandise ID, the classification ID, the merchandise name, the unit price, and the weight from the merchandise information record of the substitute merchandise, and adds the detected merchandise data to the substitute merchandise list. In contrast, when an ingredient ID that matches the non-acceptable ingredient ID is included, the processor 111 determines that the merchandise specified by the merchandise ID of the ingredient information record cannot be the substitute merchandise. In this case, data of the merchandise information record is not added to the substitute merchandise list. Here, the processor 111 functions as a retrieval unit.

The processor 111 determines whether the merchandise data are stored in the substitute merchandise list (Act79). When the merchandise data are not stored in the substitute merchandise list (NO in Act79), the processor 111 notifies the user's terminal 20 that there is no substitute merchandise (Act80). Then, the process proceeds to Act73 described above. The processor 111 repeats the processing of Act73 and thereafter in a similar manner to the processes described above.

When the merchandise data are stored in the substitute merchandise list (YES in Act79), the processor 111 transmits substitute merchandise data to the user's terminal 20 (Act81). The substitute merchandise data include at least the merchandise ID, the merchandise name, and the unit price of the merchandise data registered in the substitute merchandise list. When two or more pieces of merchandise data are registered in the substitute merchandise list, respective merchandise IDs, merchandise names, and unit prices are included in the substitute merchandise data. Here, the processor 111 functions as a second informing unit.

The processor 201 of the user's terminal 20 that transmits a substitute request command waits for data from the support server 11 (Act40). When data notifying that there is no substitute merchandise is received (NO in Act40), the processor 201 displays information that there is no substitute merchandise on the approval waiting screen, and the process proceeds Act34 described above. The processor 201 repeats the processing of Act34 and thereafter in a similar manner to the processes described above. On the other hand, when the substitute merchandise data are received (YES in Act40), the processor 201 displays the substitute merchandise screen on the touch panel 204 (Act41). All of the merchandise names and the unit prices included in the substitute merchandise data are displayed on the substitute merchandise screen. The purchase button and the clear button are displayed on the substitute merchandise screen.

The customer who checks the substitute merchandise screen is able to know the substitute merchandise that does not contain the non-acceptable ingredient from merchandise name on the screen. The customer determines whether or not he/she purchases the substitute merchandise. In a case of not purchasing the substitute merchandise, the customer touches the clear button. In a case of purchasing the substitute merchandise, the customer touches the purchase button. In this case, when there are plural kinds of substitute merchandise, the customer touches, for example, a merchandise name of a substitute merchandise to be purchased to select the substitute merchandise, and then touches the purchase button.

The processor 201 of the user's terminal 20 that displays the substitute merchandise screen waits until the purchase button or the clear button is operated (Act42, Act43). When the purchase button is operated (YES in Act42), the processor 201 transmits a purchase command to the support server 11 (Act44). The purchase command includes the member ID and the merchandise ID of the substitute merchandise. When there are plural kinds of substitute merchandise, merchandise ID of the substitute merchandise selected by a touch operation for the merchandise name is included in the purchase command. When the clear button is operated (YES in Act43), the processor 201 transmits a clear command to the support server 11 (Act45). The clear command includes a member ID.

The processor 111 of the support server 11 that transmits the substitute merchandise data waits for a command to be transmitted from the user's terminal 20 (Act82, Act83). When the purchase command is received through the communication interface 114 (YES in Act82), the processor 111 moves the merchandise data, in which the merchandise ID included in the purchase command is set, from the substitute merchandise list to the purchased merchandise list (Act84). Then, the processor 111 clears the substitute merchandise list (Act85). When a clear command is received through the communication interface 114 (YES in Act83), the processor 111 clears the substitute merchandise list without moving the merchandise data of the substitute merchandise list to the purchased merchandise list (Act85). Here, the processor 111 functions as a second receiving unit.

When the processes of Act77 or Act85 described above are ended, the processor 111 determines whether or not the merchandise data remain in the approval waiting list (Act86). When the merchandise data remain in the approval waiting list (YES in Act86), the process proceeds to Act71 described above. The processor 111 repeats the processing of Act71 and thereafter in a manner similar to the processes described above. In contrast, when the merchandise data do not remain in the approval waiting list, that is, when a determination of whether to purchase is made for merchandise corresponding to all merchandise data registered in the approval waiting list (NO in Act86), the processor 111 transmits an end notification signal to the user's terminal 20 (Act87). As such, the processor 111 ends the approval reception processing. When the approval reception processing is ended, the process returns to Act59 described above. The processor 111 repeats the processing of Act59 and thereafter in a manner similar to the processes described above.

After the processor 201 of the user's terminal 20 that transmits the approval command, the cancel command, the purchase command, or the clear command, the process returns to Act31. Accordingly, when the approval waiting screen data are received from the support server 11 (YES in Act31), the processor 201 repeats the processing of Act33 and thereafter in a manner similar to the processes described above. On the other hand, the approval waiting screen data are not received (NO in Act31) and the end notification signal is received from the support server 11 (YES in Act32), the processor 201 ends the approval processing. When the approval processing is ended, the processor 201 displays the registration screen on the touch panel 204 again (Act18). The processor 201 returns to the processing of Act12 and repeats the processing of Act12 and thereafter in a manner similar to the processes described above.

On the other hand, in the registration screen, when the service icon of the recipe icon or the coupon icon is touched (YES in Act15), the processor 201 transmits a service request command to the support server 11 (Act19). The service request command includes the member ID used for the login and a flag which indicates whether the recipe icon is touched or the coupon icon is touched.

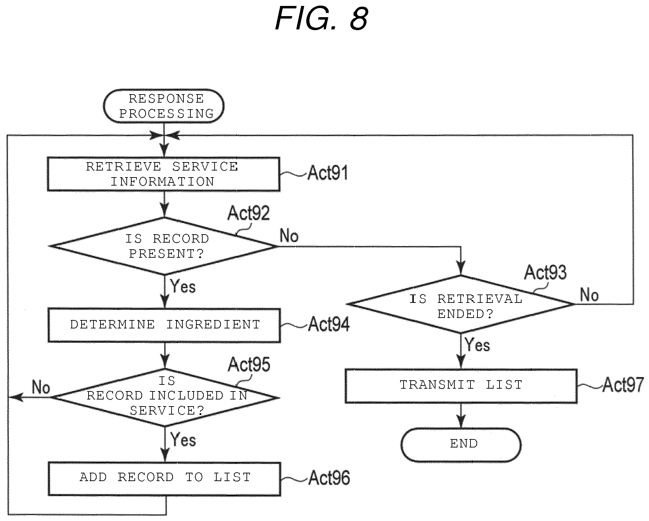

When the processor 111 of the support server 11 that transmits the registration screen data receives the service request command through the communication interface 114 (YES in Act63), the processor 111 executes service response processing which is specifically illustrated in FIG. 8 (Act65). That is, the processor 111 retrieves service information to be provided to the customer (Act91). Specifically, when the recipe icon is touched in the user's terminal 20, the processor 111 retrieves the recipe information record, in which the merchandise ID registered in the purchased merchandise list is regarded as the ingredient ID, from the recipe information database DB1. Similarly, when the coupon icon is touched in the user's terminal 20, the processor 111 retrieves the coupon information record, in which the merchandise ID registered in the purchased merchandise list is regarded as the coupon ID, from the coupon information database DB2.

The processor 111 waits until the recipe information record or the coupon information record is detected or the retrieval is ended (Act92, Act93). Each time when the recipe information record or the coupon information record is detected (YES in Act92), the processor 111 determines whether the ingredient ID (merchandise ID in a case of the coupon information record) included in the record matches the non-acceptable ingredient ID within the member information stored in transaction file FL1 (Act94). When the ingredient ID does not match the non-acceptable ingredient ID, the processor 111 determines that the recipe information record or the coupon information record is included in the service. When the ingredient ID matches the non-acceptable ingredient ID, the processor 111 determines that the recipe information record or the coupon information record is not included in the service (Act95). When the recipe information record or the coupon information record is included in the service (YES in Act95), the processor 111 adds the recipe information record or the coupon information record to the list (Act96). That is, the processor 111 adds the recipe information record to the recipe list and adds the coupon information record to the coupon list. When the recipe information record or the coupon information record is not included in the service (NO in Act95), the processor 111 does not add the recipe information record nor the coupon information record to the lists.

The processor 111 repeats retrieval of the service information. When the retrieval is ended (YES in Act93), the processor 111 transmits data of the recipe list or coupon list to the user's terminal 20 (Act97). When data of the recipe list or coupon list do not exist, the processor 111 transmits a signal notifying that the service information is absent to the user's terminal 20. Thereafter, the processor 111 returns to the processing of Act60 and repeats the processing of Act60 and thereafter in a manner similar to the processes described above.

The processor 201 of the user's terminal 20 that transmits the service request command waits until data of the recipe list or the coupon list are received (Act20). Here, when the signal notifying that the service information is absent is received (NO in Act20), the processor 201 displays the registration screen on the touch panel 204 again (Act18). The processor 201 returns to the processing of Act12 described above and repeats the processing of Act12 and thereafter in a manner similar to the processes described above.

When data of the recipe list or the coupon list is received (YES in Act20), the processor 201 displays a screen of the recipe list or the coupon list on the touch panel 204. A save button is displayed on the list screen. The customer who checks the list screen determines whether or not the list is to be saved. When the list is to be saved, the customer touches the save button.

The processor 201 of the user's terminal 20 in which the list screen is displayed determines whether the save button is touched (Act22). When the save button is touched (YES in Act22), the processor 201 stores data of the recipe list or coupon list in the auxiliary storage device 203 (Act23). The processor 201 displays the registration screen on the touch panel 204 again (Act18). The processor 201 returns to the processing of Act12 described above and repeats the processing of Act12 and thereafter in a manner similar to the processes described above.

Data of the recipe list or coupon list stored in the auxiliary storage device 203 can be printed out through the information terminal 15.

On the other hand, when the save button is not touched (NO in Act22) and the bar code is read from the image captured by the camera unit 205 (YES in Act24), the process proceeds to Act6 described above. The processor 111 repeats the processing of Act6 and thereafter in a manner similar to the processes described above.

The customer who finishes shopping causes the bar code (POS ID) written in the POS terminal 14 to be read by the camera unit 205 in order to settle the payment for the purchased merchandise. When the bar code is read from the image captured by the camera unit 205 (YES in Act14 or Act24), the processor 201 of the user's terminal 20 transmits the member ID and the bar code data to the support server 11 (Act6).

When it is recognized that the bar code data received from the user's terminal 20 is a POS ID (YES in Act62), the processor 111 of the support server 11 determines whether the merchandise data are present in the approval waiting list (Act66). When the merchandise data are present (YES in Act67), the processor 111 executes the approval reception processing described above (Act67). When the merchandise data are absent (NO in Act67), the approval reception processing is not executed.

Thereafter, the processor 111 transmits data of the purchased merchandise list, as settlement data, to the POS terminal 14 specified by the POS ID (Act68). In the POS terminal 14, settlement processing is executed based on the settlement data. The processor 111 waits until the settlement is finished (Act69). When the settlement is finished, (YES in Act69), the processor 111 transmits the settlement finish command to the user's terminal 20. As described above, the shopping support operations for a customer who uses the user's terminal 20 are ended in the support server 11.

When data received from the support server 11 are not the registration screen data (NO in Act8), the processor 201 of the user's terminal 20 that transmits the bar code data determines whether the data are the settlement completion command (Act10). In a case of the settlement completion command (YES in Act10), the processor 201 erases the registration screen. Then, the operations of the user's terminal 20 are ended.

As described above, the customer is able to use the user's terminal 20 in which the shopping support terminal program is installed to input data of merchandise which the customer plans to purchase in the sales space to the user's terminal in person. The customer is able to set the non-acceptable ingredient using the user's terminal 20. For example, the customer who is reactive with a specific allergen is able to set the ingredient which causes allergic reaction. For example, the customer who is not allowed to eat an ingredient for illness problem or religious reasons is able to set the ingredient that is not allowed to eat. Information about the non-acceptable ingredient is saved in the member database DB5 for each customer.

When a customer who registers the non-acceptable ingredient registers merchandise which the customer plans to purchase in the sales space, the support server 11 determines whether or not the merchandise contains the non-acceptable ingredient. Data of the merchandise determined to be merchandise not containing the non-acceptable ingredient is added to the purchased merchandise list of the transaction file FL1 for the customer. Data of the merchandise determined to be merchandise containing the non-acceptable ingredient is added to the approval waiting list of the same transaction file FL1. When the merchandise data are added to the approval waiting list, a confirmation icon is displayed on the touch panel 204 of the user's terminal 20. As a result, the customer is able to know that merchandise containing the non-acceptable ingredient is present in the merchandise which the customer plans to purchase.

When merchandise containing the non-acceptable ingredient exists in the merchandise which the customer plans to purchase, the customer is able to operate the touch panel 204 to thereby instruct the support server 11 to determine whether or not the merchandise is to be purchased. When an instruction to purchase the merchandise is made, the support server 11 adds data of the merchandise, which is added to the approval waiting list, to the purchased merchandise list. Data of the merchandise on the approval waiting list is deleted. On the other hand, when an instruction not to purchase the merchandise is made, data of the merchandise added to the approval waiting list is deleted and is not added to the purchased merchandise list.

When not purchasing the merchandise, the customer is able to operate the touch panel 204 to search the substitute merchandise which can be substituted for the merchandise containing the non-acceptable ingredient. In this case, the support server 11 determines whether or not the merchandise which can be substituted is merchandise containing the non-acceptable ingredient. The merchandise containing the non-acceptable ingredient is excluded from the substitute merchandise. Data of the substitute merchandise containing the non-acceptable ingredient is added to the substitute merchandise list of the transaction file FL1. The customer is able to operate the touch panel 204 to thereby instruct whether or not the substitute merchandise is to be purchased. When an instruction to purchase the merchandise is made, the support server 11 adds data of the merchandise, which is added to the substitute merchandise list, to the purchased merchandise list.

The merchandise data added to the purchased merchandise list are output to the POS terminal 14 and provided for registration processing and settlement processing in the POS terminal 14. As a result, the customer is able to confirm that the merchandise containing the non-acceptable ingredient is not purchased before settlement and thus is able to do shopping without worries. The customer is able to readily select whether or not the merchandise containing the non-acceptable ingredient is to be purchased. Accordingly, for example, it is also possible to respond to a case where the merchandise containing the non-acceptable ingredient is purchased for a family. The customer is able to readily confirm merchandise which can be substituted for the merchandise containing the non-acceptable ingredient. When the customer intends to purchase the substitute merchandise, the customer may perform one touch operation on the touch panel 204 to add data of the merchandise to the purchased merchandise list. Accordingly, it is possible to simplify time and effort for capturing the image of the merchandise by the camera unit 205 in order to read the bar code of the substitute merchandise.

The image of the substitute merchandise is also able to be captured by the camera unit in a manner similar to the one for normal merchandise which the customer plans to purchase. As a result, it is possible to omit a function of additionally registering the substitute merchandise by one touch operation (Act42, Act44, Act82, Act84).

The customer who uses the user's terminal 20 is able to receive a recipe using a food product that the customer plans to purchase. Also, in the case, a recipe which includes the non-acceptable ingredient is not introduced. Accordingly, the customer is able to utilize the recipe introduction service without worries.

Similarly, the customer who uses the user's terminal 20 is able to receive a coupon for an associated food product that the customer plans to purchase. Also, in the case, the coupon is not issued for the merchandise which includes the non-acceptable ingredient. Accordingly, the customer is able to utilize the coupon issuance service without worries.

The contents of the processing described above and illustrated in FIG. 2 to FIG. 8 are an example. As long as similar results can be obtained, various processing may be suitably carried out.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A method of carrying out product registration, the method comprising:
responsive to a first command to start product registration, which is wirelessly transmitted from a user computing device along with a customer ID, generating a product registration file associated with the customer ID in a local data storage of the product registration server, and retrieving a customer record associated with the customer ID from a first data storage region, the customer record including one or more non-acceptable ingredient IDs in the customer record;
responsive to a second command including a product ID, which is wirelessly transmitted from the user computing device along with the customer ID after the first command, retrieving an ingredient record associated with the product ID from a second data storage region, the ingredient record including one or more ingredient IDs in the ingredient record;
when each ingredient ID included in the ingredient record matches none of non-acceptable ingredient IDs included in the customer record, registering the product ID in a registered product list of a product registration file, and transmitting, to the user computing device, product registration screen data for generating a first product registration screen that does not include a selectable object for confirming registration of the product ID;
when an ingredient ID included in the ingredient record matches a non-acceptable ingredient ID included in the customer record, registering the product ID in a registration pending of the product registration file, and transmitting, to the user computing device, product registration screen data for generating a second product registration screen that includes the selectable object for confirming registration of the product ID; and
responsive to a third command to complete the product registration, which is wirelessly transmitted from the user computing device along with a point-of-sale (POS) terminal ID, transmitting data in the registered product list, and not data in the registration pending list, to a POS terminal identified by the POS terminal ID.

2. The method according to claim 1, wherein the method further comprises:
responsive to a fourth command, which is wirelessly transmitted from the user computing device when the selectable object is selected on the second product registration screen, adding the product ID to the registered product list and deleting the product ID from the registration pending list.

3. The method according to claim 1 or 2, wherein the second product registration screen also includes a second selectable object for requesting a substitute product, and the method further comprises:
responsive to a fifth command, which is wirelessly transmitted from the user computing device when the second selectable object is selected on the second product registration screen, retrieving a product record associated with the product ID from a third data storage region and including a substitute product ID therein, and retrieving an ingredient record associated with the substitute product ID from the second data storage region, the ingredient record associated with the substitute product ID including one or more ingredient IDs therein.

4. The method according to claim 3, wherein the method further comprises:
when none of the ingredient IDs included in the ingredient record associated with the substitute product ID match any of the non-acceptable ingredient IDs included in the customer record, registering the substitute product ID in a substitute list of the product registration file, and transmitting, to the user computing device, substitute product screen data for generating a substitute product screen including information of a substitute product identified by the substitute product ID; and
when an ingredient ID included in the ingredient record associated with the substitute product ID matches a non-acceptable ingredient ID included in the customer record, transmitting a notification of no substitute product to the user computing device, without registering the substitute product ID in the substitute list.

5. The method according to claim 4, wherein the substitute product screen includes a third selectable object for confirming registration of the substitute product, and the method further comprises:
responsive to a fifth command, which is wirelessly transmitted from the user computing device when the third selectable object is selected on the substitute product screen, adding the substitute product ID to the registered product list and deleting the substitute product ID form the substitute list.

6. The method according to claim 5, wherein the first product registration screen also includes a fourth selectable object for requesting a recipe, and the method further comprises:
responsive to a sixth command, which is generated by the user computing device when the fourth selectable object is selected on the first product registration screen, retrieving a recipe record associated with the product ID from a fourth data storage region, the recipe record including one or more ingredient IDs therein.

7. The method according to claim 6, wherein
when none of the ingredient IDs included in the recipe record matches any of the non-acceptable ingredient IDs included in the customer record, registering the recipe record in a recipe list of the product registration file, and transmitting data of the recipe record to the user computing device; and
when an ingredient ID included in the recipe record matches a non-acceptable ingredient IDs included in the customer record, transmitting a notification of no recipe to the user computing device, without registering the recipe record in the recipe list.

8. The method according to claim 6 or 7, wherein the first product registration screen also includes a fifth selectable object for requesting a coupon, and the method further comprises:
responsive to a seventh command, which is generated by the user computing device when the fifth selectable object is selected on the first product registration screen, retrieving a coupon record associated with the product ID from a fifth data storage region, the coupon record including one or more ingredient IDs therein.

9. The method according to claim 8, wherein
when none of the ingredient IDs included in the coupon record matches any of the non-acceptable ingredient IDs included in the customer record, registering the coupon record in a coupon list of the product registration file, and transmitting data of the coupon record to the user computing device; and
when an ingredient ID included in the coupon record matches a non-acceptable ingredient IDs included in the customer record, transmitting a notification of no coupon to the user computing device, without registering the coupon record in the coupon list.

10. A non-transitory computer readable medium comprising a program that is executable in a product registration server to cause the product registration server to perform the method of carrying out product registration according to any one of claims 1 to 9.

11. A computer program product storing executable code for the method according to any one of claims 1 to 9.

12. A self-registration system comprising:
a product registration server;
a user computing device in communication with the product registration server; and
a plurality of point-of-sale terminals in communication with the product registration server, wherein
the product registration server is configured to carry out product registration by performing the steps of the method according to any one of claims 1 to 9.
